# EUROPÄISCHE PATENTSCHRIFT

(11) **EP 0 494 168 B1**
(45) Veröffentlichungstag und Bekanntmachung des Hinweises auf die Patenterteilung: **01.06.1994**
(21) Anmeldenummer: 90913327.4
(22) Anmeldetag: 13.09.1990
(51) Int. Cl.: B60T 8/88

(54) **BREMSDRUCKREGELSYSTEM**
BRAKE PRESSURE REGULATING SYSTEM
SYSTEME DE REGULATION DE PRESSION DE FREINAGE

(30) Priorität: 29.09.1989 DE 3932638
(43) Veröffentlichungstag der Anmeldung: 15.07.1992
(73) Patentinhaber: ROBERT BOSCH GMBH, 70442 Stuttgart (DE)
(72) Erfinder: MÜLLER, Elmar, D-7145 Markgröningen (DE); MÜLLER, Werner, Nishi-ku Higashi Gaoka 75 (JP)
(86) Internationale Anmeldenummer: EP9001553
(87) Internationale Veröffentlichungsnummer: WO9104897

(56) Entgegenhaltungen:
- EP-A- 0 177 310
- FR-A- 2 474 417
- GB-A- 2 158 905
- US-A- 3 711 827
- US-A- 4 009 914

## Beschreibung

### Stand der Technik

Aus der DE-OS 22 32 034 ist ein Antiblockierregelsystem bekannt, das die Bremsdrucksteuerventile auf ihre Ansprechzeit überwacht. Überschreitet die Ansprechzeit eine vorgegebene Größe, so wird normalerweise das System abgeschaltet und eine Warnlampe mit Dauersignal angesteuert. Liegen jedoch zum Zeitpunkt der vorgesehenen Abschaltung bestimmte Radzustände vor, so wird nicht abgeschaltet, sondern für eine Zeitspanne ein abwechselnder Druckauf- und Druckabbau an beiden Rädern einer Achse durchgeführt, also eine Art automatische Stotterbremse wirksam gemacht.

Aus der DE-A1 3102 108 ist es auch bekannt, bei einem ABS bei Auftreten eines Fehlers, das ABS nicht sofort abzuschalten, sondern für eine Zeit einen eingeschränkten Regelbetrieb aufrecht zu erhalten und erst danach das ABS abzuschalten. Bei eingeschränktem Regelbetrieb wird dabei die'Warnlampe getaktet betrieben, beim Abschalten eine Daueransteuerung der Warnlampe vorgenommen.

### Vorteile der Erfindung

Bei der erfindungsgemäßen Ausbildung des Verfahrens wird bei bestimmten auftretenden Fehlern ein für Zweiradfahrzeuge besonders günstiger eingeschränkter Regelbetrieb wirksam gemacht und der Fahrer wird auf diesen eingeschränkten Regelbetrieb aufmerksam gemacht.

### Figurenbeschreibung

Anhand der Zeichnung wird ein Motorrad Antiblockierregelsystem beschrieben, bei dem eine Vielzahl von Uberwachungseinrichtungen das Auftreten von Fehlern überwachen. In Abhängigkeit von der Art der Fehler und davon, unter welchen Umständen die Fehler auftreten, werden die Fehler klassifiziert. Hiervon ist dann die eingeleitete Reaktion abhängig, nämlich sofortiges Abschalten oder zuerst Aufrechterhalten eines eingeschränkten Regelbetriebs und dann Abschalten des Reglers.

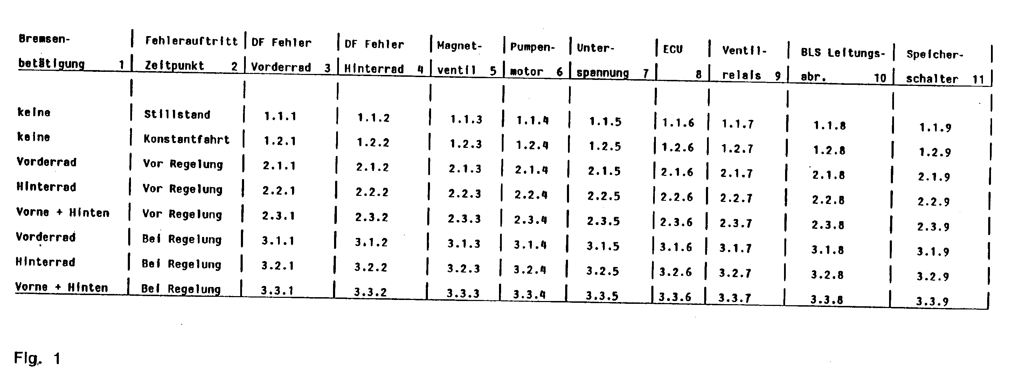

In der Tabelle der Fig. 1 sind die möglichen Fehler für verschiedene Situationen klassifiziert.

In Spalte 1 ist jeweils gesagt, ob und wo gebremst wird.

In Spalte 2 sind verschiedene Ereigniszeitpunkte für den Asufall einzelner Komponenten (Spalten 3 - 11) aufgelistet, wobei die einzelnen Ausdrücke folgendes bedeuten
- Stillstand: : Fehler tritt bei Fahrzeughalt auf
- Konstantfahrt: : Fehler tritt bei Fahrt auf
- Vor Regelung: : Fehler tritt während der Fahrt bei Teilbremsung oder zuerst ohne Bremsen und Bremsbetätigung in der Warnzeit auf.
- Bei Regelung: : Fehler tritt während einer ABS-Regelung auf.

2.3.1 bedeutet damit beispielsweise:

Während der ungebremsten (oder teilgebremsten) Fahrt fällt der Drehzahlfühler am Vorderrad aus, wodurch die Regelung aufgelöst wird (über Schlupfsignal und/oder Verzögerungssignal). Danach erfolgt eine Bremsung beider Räder in die Warnzeit hinein.

Aus der Tabelle der Fig. 1 werden bezüglich der Verarbeitung von Drehzahlfühlerfehlern fünf Fehlerklassen abgeleitet, bei denen unterschiedlich reagiert wird.
1. Fehlerklasse umfaßt die Fehler 1.1.1 und 1.1.2
   Es wird wie folgt reagiert:
   a) Das ABS-System wird sofort abgeschaltet
   b) Die Warnlampe wird mit Dauersignal angesteuert. Das normale Bremssystem ist verfügbar.
2. Fehlerklasse umfaßt die Fehler 1.2.1 und 1.2.2
   Es wird wie folgt reagiert:
   a) Das ABS-System wird nach einer Warnzeit von z.B. 10 sec. abgeschaltet
   b) Die Warnlampe wird während der Warnzeit gepulst, nach der Abschaltung mit Dauersignal angesteuert. Nach der Abschaltung ist das normale Bremssystem verfügbar.
3. Fehlerklasse umfaßt die Fehler 2.1.1, 2.2.2, 3.1.1, 3.2.2
   Es wird wie folgt reagiert:
   a) Es ist nach Fehlererkennung eine eingeschränkte ABS-Funktion wirksam und zwar bis zum Ende der Regelung oder bis zum Fahrzeugstillstand; danach erfolgt Abschaltung. Bei der eingeschränkten ABS-Funktion wird über das 3/3-Magnetventil Druck gepulst am defekten Rad aufgebaut und zwar bis eine berechnete oder gemessene Verzögerung von 0.3 g erreicht wird; dann erfolgt Druckhalten.
   b) Es erfolgt während der eingeschränkter Funktion eine gepulste Ansteuerung der Warnlampe; danach erfolgt Daueransteuerung (nach Abschaltung). Nach der Abschaltung ist das normale Bremssystem verfügbar.
4. Fehlerklasse umfaßt die Fehler 2.1.2, 2.2.1, 3.1.2, 3.2.1
   Es wird wie folgt reagiert:
   a) Auch hier ist nach Fehlererkennung eine eingeschränkte ABS-Funktion bis zum Ende der Regelung oder Fahrzeugstillstand wirksam: danach erfolgt Abschaltung. Die eingeschränkte ABS-Funktion besteht in einer normalen Regelung des Bremsdrucks des intakten Rades, bei eingeschränkter Referenzbildung (nur das geregelte Rad trägt bei).
   b) Während der eingeschränkten Funktion erfolgt gepulste Ansteuerung der Warnlampe; nach Abschaltung erfolgt Dauersteuerung. Nach dem Abschalten ist das normale Bremssystem verfügbar.
5. Fehlerklasse umfaßt die Fehler 2.3.1, 2.3.2, 3.3.1, 3.3.2
   Es wird wie folgt reagiert:
   a) Es wird nach Fehlererkennung eine eingeschränkte ABS-Funktion aufrechterhalten und zwar bis zum Ende der Regelung oder Fahrzeugstillstand; danach erfolgt Abschaltung. Bei der eingeschränkten ABS-Funktion wird eine normale Regelung des intakten Rades, bei eingeschränkter Referenzbildung aufrechterhalten. Zusätzlich erfolgt gepulster Druckaufbau über das 3/3-Magnetventil am Rad mit dem defekten Fühler und zwar solange bis eine berechnete oder gemessene Fahrzeugverzögerung von 0.3 g erreicht wird; dann erfolgt Druckhalten am defekten Rad.
   b) Während der eingeschränkten Funktion wird die Warnlampe gepulst angesteuert. Nach Abschaltung erfolgt Daueransteuerung. Nach Abschalten des ABS ist das normale Bremssystem verfügbar.

Für die anderen in der Tabelle aufgeführte Fehler gilt folgendes:
a) Das ABS wird sofort abgeschaltet bei den Fällen 1.1.3 (ein Ventil fällt aus) 1.1.4 (Pumpenmotor defekt), 1.1.5 (es wird eine Unterspannung festgestellt) 1.1.6 bis 3.3.6 (Fehler in der Elektronik), 1.1.7 bis 3.3.7 (Defekt am Ventilrelais), 1.1.8 (Bremslichtschalter Leistungsabriß) und 1.1.9 (Auftreten eines Schalterfehlers am Hydraulikspeicher).
b) Das ABS wird nach einer Warnzeit von z.B. 10 sec. abgeschaltet in den Fällen 1.2. 3, 2.1.3, 2.2.3 und 2.3.3 (ein Magnetventilausfall unter verschiedenen Umständen, 1.2.4, 2.1.4, 2.2.4 und 2.3.4 (Pumpenmotorausfall unter verschiedenen Umständen) 1.2.5, 2.1.5, 2.2.5 und 2.3.5 (bei Auftreten einer Unterspannung unter verschiedenen Umständen) 1.2.8, 2.1.8, 2.2.8 und 2.3.8 (Leistungsabriß des Bremslichtschalters unter verschiedenen Umständen) und 1.2. 9, 2.1.9, 2.2.9 und 2.3.9 (Auftreten eines Speicherschalterfehlers unter verschiedenen Umständen).
c) Schließlich wird das ABS erst abgeschaltet, wenn die Regelung beendet ist oder das Motorrad zum Stillstand gekommen ist, in den Fällen 3.1.3, 3.2.3 und 3.3.3 (ein Magnetventilausfall während der Regelung), 3.1.4, 3.2.4 und 3.3.4 (Pumpenmotorfehler während der Regelung) 3.1.5, 3.2.5 und 3.3.5 (Auftreten einer Unterspannung während der Regelung) 3.1.8, 3.2.8 und 3.3.8 (Leitungsabriß BLS während der Regelung) und 3.1.9, 3.2.9 und 3.3.9 (Speicherschalterfehler während der Regelung).
   In den Fällen b) und c) erfolgt vom Erkennen des Fehlers bis zur gänzlichen Abschaltung eine gepulste Ansteuerung der Warnlampe, danach eine Daueransteuerung.

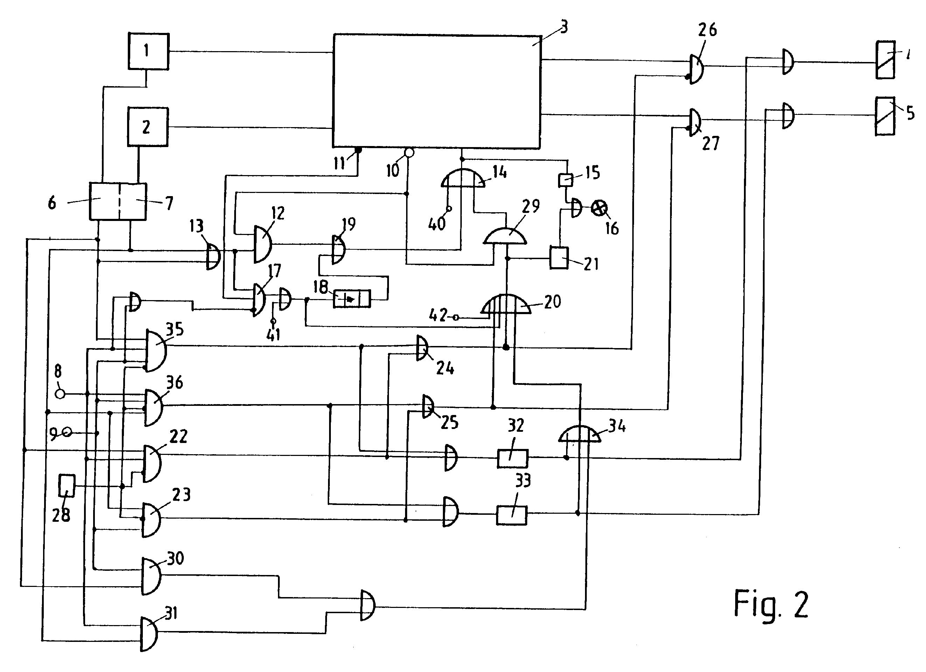

Ein Ausführungsbeispiel zur Realisierung der obigen Reaktionen auf einen Sensorausfall zeigt die Fig. 2 der Zeichnung. Dort sind den beiden Fahrzeugrädern zugeordnete Sensoren mit 1 und 2, eine Auswerteschaltung mit 3 und je ein den Radbremsen zugeordnetes Magnetventil mit 4 und 5 bezeichnet. Entsprechend dem durch die Sensoren 1 und 2 ermittelten Radbewegungsverhalten wird der Bremsdruck an den Radbremsen variiert.

Durch die Uberwachnungsblöcke 6 und 7 werden die Sensoren 1 und 2 überwacht. Die Überwachungsblöcke 6 oder 7 geben ein Signal ab, wenn der zugehörige Sensor defekt ist. An einer Klemme 8 liegt Signal an, wenn die Vorderradbremse betätigt ist. An einer Klemme 9 liegt Signal an, wenn die Hinterradbremse betätigt ist. Über eine Klemme 10 gibt die Auswerteschaltung 3 ein Signal ab, wenn das Fahrzeug steht, über eine Klemme 11 ein Signal, wenn das Fahrzeug fährt.
1. Fehlerklasse
   Wird einer der Sensoren 1 oder 2 während eines Stillstands defekt, so wird ein Und-Gatter 12 (über die Klemme 10 und ein Oder-Gatter 13) durchlässig und gibt ein Abschaltsignal an die Auswerteschaltung 3 (über ein Oder-Gatter 14). Gleichzeitig wird durch dieses Signal ein bistabiles Glied 15 gekippt, das dann eine Warnlampe 16 (Dauer) ansteuert.
2. Fehlerklasse
   Fährt das Fahrzeug (Signal an Klemme 11) und fällt ein Sensor aus, so wird - keine Bremsbetätigung vorausgesetzt - ein Und-Gatter 17 durchlässig und stößt ein Zeitglied 18 an, das nach einer vorgegebenen Zeit über ein Oder-Gatter 19 und ein Oder-Gatter 14 das ABS abschaltet. In der Wartezeit des Zeitglieds 18 wird durch das Ausgangssignal des Und-Gatters 17 über ein Oder-Gatter 20 ein Impulsgenerator 21 aktiviert, der die Warnlampe 16 gepulst ansteuert, bis anschließend die Warnlampe durch das Abschaltsignal und das bistabile Glied 15 voll angesteuert wird.
3. Fehlerklasse
   Mittels Und-Gatter 22 und 23 wird geprüft, ob der Sensor 1 oder 2 an einem gebremsten Rad ausgefallen ist. Ist dies der Fall, so wird über ein Oder-Gatter 24 oder 25 und ein Und-Gatter 26 oder 27 die Ansteuerung eines der Ventile 4 oder 5 unterbrochen, sodaß Druck an der zugehörigen Bremsen aufgebaut wird. Das Sperrsignal endet, wenn z.B. ein Fahrzeugverzögerungsgeber 28 bei Erreichen einer Fahrzeugverzögerung von z.B. 0,3 g ein Signal abgibt und die Und-Gatter 22 oder 23 sperrt. Die Rückflanke des Ausgangssignals eines der Und-Gatter 22 oder 23 stößt eines der bistabilen Glieder 32 oder 33 an, das nun das Magnetventil 4 oder 5 des Rads, dessen Sensor ausgefallen ist, in die Konstanthaltestellung bringt und damit den eingesteuerten Druck hält. In der Periode der eingeschränkten ABS-Funktion wird über das Oder-Gatter 20 eine gepulste Ansteuerung der Warnlampe 16 vorgenommen. Kommt das Fahrzeug zum Stillstand, so wird über ein Oder-Gatter 34, das Oder-Gatter 20 und ein Und-Gatter 29 die Abschaltung eingeleitet und die Warnlampe 16 dauer angesteuert.
4. Fehlerklasse
   Hier wird mittels Und-Gatter 30, 31 geprüft, ob der Sensor des nicht gebremsten Fahrzeugrads ausfällt. Das dann erzeugte Ausgangssignal eines der Und-Gatter 30 oder 31 läßt das gebremste Rad, dessen Sensor ja intakt ist, unbeeinflußt, löst jedoch über die Oder-Gatter 34 und 20 zuerst die gepulste Warnlampenansteuerung aus, die dann ab Fahrzeugstillstand und ABS-Abschaltung in eine Daueransteuerunf übergeht. Nicht eingezeichnet ist je eine Verbindung zwischen den Und-Gattern 30 und 31 und der Auswerteschaltung 3, die eine Umschaltung in der Auswerteschaltung auf Referenzbildung mit dem noch intakten Sensor bewirken.
5. Fehlerklasse
   Schließlich prüfen die beiden Und-Gatter 35 und 36, ob während der Betätigung beider Bremsen einer der Sensoren ausfällt. Ist dies der Fall, so wird die Ansteuerung des zugehörigen Magnetventils 4 oder 5 über Oder-Gatter 24 bzw. 25 verhindert und damit Druck aufgebaut.

Endet das Ausgangssignal des Und-Gatters 35 bzw. 36, weil z.B. der Fahrzeugverzögerungsgeber 28 bei Erreichen einer bestimmten Fahrzeugverzögerung ein Signal abgibt, so wird durch die Rückflanke dieses Signals eines der bistabilen Glieder 32 oder 33 gesetzt und damit an dem entsprechenden Rad Druck konstant gehalten. Das andere Rad bleibt unbeeinflußt. Die Warnlampenansteuerung entspricht der der 3. Fehlerklasse.

Im Falle der Fehler gemäß a) oben wird ein entsprechendes Signal auf die Klemme 40 des Oder-Gatter 14 gegeben und damit das ABS sofort abgeschaltet.

Im Falle der Fehler gemäß b) oben wird ein Signal auf eine Klemme 41 gekoppelt, das dann die Abschaltung nach einer Zeit und das Takten der Warnlampe in dieser Zeit bewirkt.

Schließlich wird ein Fall der Fehler gemäß c) oben ein Signal auf eine Klemme 42 gegeben, durch das ab Fahrzeugstillstand das ABS abgeschaltet und bis dahin die Warnlampe 16 getaktet wird. Auf der Klemme 10 kann ein Signal erscheinen, wenn entweder Fahrzeugstillstand oder die Regelung beendet ist.

Das Ausführungsbeispiel der Fig. 2 ist als Hardware Schaltung ausgeführt. Seine Funktionen können natürliche auch mittels eines Rechners und entsprechend ausgebildeten Software realisiert werden.

## Patentansprüche

1. Bremsdruckregelsystem für ein Kraftfahrzeug, bei dem der Bremsdruck zeitweise durch das Verhalten der mittels Drehzahlfühler überwachten Fahrzeugräder bestimmt wird, bei dem eine Überwachung des Regelsystems auf auftretende Fehler erfolgt, bei dem bei Auftreten eines Fehlers zuerst für eine Zeit ein eingeschränkter Regelbetrieb aufrechterhalten wird und danach eine völlige Abschaltung des Reglers erfolgt und bei dem der eingeschränkte Regelbetrieb und das Abschalten des Reglers durch unterschiedliche Warnsignale angezeigt werden, dadurch gekennzeichnet, daß das Kraftfahrzeug ein Zweiradkraftfahrzeug mit getrennt betätigbaren Vorder- und Hinterradbremsen ist und daß bei Betätigung nur einer der Bremsen und Auftreten eines Fehlers an dem Drehzahlfühler des gebremsten Rads und zwar vor Einsetzen der Regelung oder bei laufender Regelung der eingeschränkte Regelungsbetrieb in einem gepulsten Druckaufbau am gebremsten Rad bis zum Erreichen einer vorgegebenen Fahrzeugverzögerung besteht.
2 Bremsdruckregelsystem für ein Kraftfahrzeug, bei dem der Bremsdruck zeitweise durch das Verhalten der mittels Drehzahlfühler überwachten Fahrzeugräder bestimmt wird, bei dem eine Überwachung des Regelsystems auf auftretende Fehler erfolgt, bei dem bei Auftreten eines Fehlers zuerst für eine Zeit ein eingeschränkter Regelbetrieb aufrechterhalten wird und danach eine völlige Abschaltung des Reglers erfolgt und bei dem der eingeschränkte Regelbetrieb und das Abschalten des Reglers durch unterschiedliche Warnsignale angezeigt werden, dadurch gekennzeichnet, daß das Kraftfahrzeug ein Zweiradkraftfahrzeug mit getrennt betätigbaren Vorder- und Hinterradbremsen ist und daß bei Betätigung beider Bremsen und Auftreten eines Fehlers an einem der Drehzahlfühler und zwar vor Einsetzen der Regelung oder bei laufender Regelung der eingeschränkte Regelüngsbetrieb in einer Weiterregelung des Bremsdrucks des Rads mit dem intakten Drehzahlfühler bei Bildung des Referenzgeschwindigkeitssignals aus nur dem einen Drehzahlfühlersignal und zusätzlich in einem gepulsten Druckaufbau am anderen Rad bis zum Erreichen einer vorgegebenen Fahrzeugverzogerung besteht.

2. Bremsdruckregelsystem nach Anspruch 1 oder 2, dadurch gekennzeichnet, daß bei Auftreten eines Drehzahlfühlerfehlers vor einer Bremsung bereits das Warnsignal des eingeschränkten Regelbetriebs in Betrieb gesetzt wird und in dieser Warnphase am Rad mit dem fehlerhaften Drehzahlfühler gebremst wird, der gleiche eingeschränkte Regelungsbetrieb wirksam gemacht wird.

3. Bremsdruckregelsystem nach einem der Ansprüche 1 - 3, dadurch gekennzeichnet, daß bei eingeschränkten Regelbetrieb die Warnlampe getaktet und beim Abschalten dauernd angesteuert wird.

## Claims

1. Brake pressure control system for a motor vehicle, in which the brake pressure is determined periodically by the behaviour of the vehicle wheels which are monitored by means of rpm sensors, in which the control system is monitored for the occurrence of faults, in which a restricted control mode is initially maintained for a time when a fault occurs and subsequently complete switching-off of the controller takes place, and in which the restricted control mode and the switching-off of the controller are indicated by different warning signals, characterized in that the motor vehicle is a two-wheeled motor vehicle with front and rear wheel brakes which can be actuated separately, and in that when only one of the brakes is actuated and a fault occurs at the rpm sensor of the braked wheel, specifically before the control starts or when the control is operating, the restricted control mode consists in a pulsed pressure build-up at the braked wheel until a predetermined vehicle deceleration is reached.

2. Brake pressure control system for a motor vehicle, in which the brake pressure is determined periodically by the behaviour of the vehicle wheels which are monitored by means of rpm sensors, in which the control system is monitored for the occurrence of faults, in which a restricted control mode is initially maintained for a time when a fault occurs and subsequently complete switching-off of the controller takes place, and in which the restricted control mode and the switching-off of the controller are indicated by different warning signals, characterized in that the motor vehicle is a two-wheeled motor vehicle with front and rear wheel brakes which can be actuated separately, and in that when both brakes are actuated and a fault occurs at one of the rpm sensors, specifically before the control starts or when the control is operating, the restricted control mode consists in a continued control of the brake pressure of the wheel with the intact rpm sensor with formation of the reference speed signal from only one rpm sensor signal and additionally in a pulsed pressure build-up at the other wheel until a predetermined vehicle deceleration is reached.

3. Brake pressure control system according to Claim 1 or 2, characterized in that when an rpm sensor fault occurs before braking the warning signal of the restricted control mode is already activated and, when braking occurs during this warning phase at the wheel with the faulty rpm sensor, the same restricted control mode is actuated.

4. Brake pressure control system according to one of Claims 1 - 3, characterized in that in restricted control mode the warning lamp is clocked and, when switching-off takes place, is driven continuously.

## Revendications

1. Système de régulation de la pression de freinage d'un véhicule à moteur selon lequel la pression de freinage est définie par le comportement des roues du véhicule surveillées par un capteur de vitesse de rotation, la surveillance du système de régulation se faisant en fonction des défauts qui arrivent, et, en cas de défauts, on maintient tout d'abord un mode de régulation restreint pendant un certain temps, puis on coupe complètement le moyen de régulation et on affiche par des signaux d'avertissement différents, le mode de régulation restreint et la coupure du moyen de régulation, système caractérisé en ce que le véhicule à moteur est un motocycle dont les freins de roues avant et arrière sont commandés séparément et, en cas d'actionnement de l'un seulement des freins et d'arrivée d'un défaut sur le capteur de vitesse de rotation associé à la roue freinée et cela avant la mise en oeuvre de la régulation ou pendant une régulation continue, le mode de régulation restreint consiste en une montée en pression impulsionnelle sur la roue freinée jusqu'à ce que l'on atteigne une décélération prédéterminée du véhicule.

2. Système de régulation de la pression de freinage d'un véhicule à moteur, selon lequel la pression de freinage est définie de temps à autre par le comportement des roues de véhicule surveillées par les capteurs de vitesse de rotation, la surveillance du système de régulation se faisant suivant les défauts et en cas d'arrivée d'un défaut, on maintient tout d'abord un mode de régulation limité pendant un temps donné, puis on assure une coupure complète du régulateur et on affiche par des signaux avertisseurs différents pour le mode de fonctionnement illimité de régulation et pour la coupure du moyen de régulation, système caractérisé en ce que le véhicule à moteur est un motocycle à freins de roues avant et arrière actionnés séparément et dans lequel, lorsque les deux freins sont actionnés et en cas de défauts sur l'un des capteurs de vitesse de rotation et cela avant la mise en oeuvre de la régulation ou pendant la mise en oeuvre de la régulation pour le mode de régulation restreint, on poursuit la régulation de la pression de frein de la roue avec un capteur de vitesse de rotation intact, en formant le signal de vitesse de référence à partir seulement d'un signal de capteur de vitesse de rotation et, en outre, d'une montée en pression impulsionnelle sur l'autre roue jusqu'à ce que l'on atteigne une décélération prédéterminée du véhicule.

3. Système de régulation de la pression de freinage d'un véhicule à moteur selon la revendication 1 ou 2, caractérisé en ce qu'en cas de défaut du capteur de vitesse de rotation, le signal avertisseur est mis en oeuvre avant tout freinage pour le mode de régulation sans restriction et, dans cette phase d'avertissement, on freine la roue du capteur de vitesse de rotation défectueux et on active le même mode de régulation sans restriction.

4. Système de régulation de la pression de freinage d'un véhicule à moteur selon les revendications 1 à 3, caractérisé en ce que, pour un mode de régulation sans restriction, le voyant lumineux est commandé en cadence et, lors de la coupure, est commandé en permanence.
